(19) Europäisches Patentamt
European Patent Office
Office européen des brevets

(11) **EP 3 095 321 A1**

(12) **EUROPEAN PATENT APPLICATION**

(43) Date of publication:
**23.11.2016 Bulletin 2016/47**

(51) Int Cl.:
*A01G 27/04* (2006.01)    *A01G 27/00* (2006.01)

(21) Application number: **15194446.9**

(22) Date of filing: **13.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.05.2015 DK 201570285**

(71) Applicant: **3KF**
**8300 Odder (DK)**

(72) Inventor: **ANDERSEN, Morten Kjeldsen**
**8300 Odder (DK)**

(74) Representative: **Inspicos P/S**
**Kogle Allé 2**
**2970 Hørsholm (DK)**

(54) **ARRANGEMENT FOR AUTOMATIC SUPPLY OF WATER TO INDOOR PLANTS**

(57) The present invention relates to a watering bag (100, 200, 300, 400, 500, 700, 803) for automatic supply of water to plants (801), such as indoor plants. The watering bag comprises a water inlet region (301, 401, 501, 703), a water reservoir (103, 203, 302, 402, 502, 701), and a water outlet region (102, 202, 602, 610), wherein the water inlet region comprises an opening for leading water to the water reservoir, and wherein the water outlet region comprises a friction inducing arrangement (104, 204, 304, 404, 504, 604, 612, 705) for leading water from the water reservoir to the surroundings in a controlled manner.

Fig. 4

**EP 3 095 321 A1**

**Description**

FIELD OF THE INVENTION

The present invention relates to an arrangement for automatic watering of indoor plants during a predetermined period, such as during vacation periods.

BACKGROUND OF THE INVENTION

In relation to vacation periods and other travel activities, indoor plants will very often sacrifice due to the lack of watering during the period where no one at home.

A normal way to cope with this is to over-water just before leaving the home with the risk of overflow and soaked roots in the start of the period and a dried-up plant at the end of the period. Both situations will stress the indoor plant and as a result be a gambling with the survival of the in many times very expensive indoor plant.

Another very used method is to involve neighbours, nearby family etc. to enter the house from time to time during the vacation period for watering the plants. However, this is taking other people's time and in addition this is getting more and more difficult due to the trend of more theft alarms installed in the houses these days.

Thus, there is a need for some kind of watering arrangements so that indoor plants can take of themselves during for example a vacation period.

It may thus be seen as an object of embodiments of the present invention to provide an arrangement that provides water to indoor plants during a predetermined period of time, such as a vacation period, in a controlled manner.

DESCRIPTION OF THE DRAWINGS

The above-mentioned object is complied with by providing a watering bag for automatic supply of water to indoor plants, the watering bag comprising

> 1) a water inlet region,

> 2) a water reservoir, and

> 3) a water outlet region,

wherein the water inlet region comprises an opening for leading water to the water reservoir, and wherein the water outlet region comprises a friction inducing arrangement for leading water from the water reservoir to the exterior of the watering bag in a controlled manner.

The watering bag of the present invention is of particular relevance in relating to watering of indoor plants being positioned in pots.

It is advantageous that the watering bag of the present invention provides a cheap and reliable watering system which finds its primary use when indoor plants are left without surveillance for longer periods of time, such as during vacation periods.

The watering bag may comprise a pair of polymer foils being welded together. The friction inducing arrangement is provided for leading water to the plant in a controllable way. In principle the friction inducing arrangement may be implemented in various ways, including a guided water path and/or a plurality of welded dots arranged in a predefined pattern. Other types of friction inducing arrangements may be applicable as well. Such other friction inducing arrangements may include the use of one or more meshes.

The watering bag may comprise one or more releasable binding means being adapted to secure the watering bag to a plant. These binding means may be implemented as releasable binding strips.

The reservoir may in principle have any capacity. However, in order to cover a 7-10 days watering period the water reservoir may be capable of housing between 1 and 4 litres of water, such as between 2 and 3 litres of water, such as around 2,3 litres of water.

The watering bag may comprise a folding region at which the watering bag is adapted to fold when it is positioned on the soil of for example an indoor plant. The folding region may be defined by a number of welded dots.

In a first embodiment the friction inducing arrangement may be provided by punching a hole in the welded foils using a sharp tip. The diameter of the hole may be around 0.2 mm. This ensures that one droplet of water is provided at least every 60 seconds, such as at least every 45 seconds, such as at least every 30 seconds.

In a second embodiment the friction inducing arrangement may comprise a mesh having a predetermined permeability. The permeability of the mesh may be at least partly given by the material density/openness of the mesh, said openness being in the range 2-10%, such as 2-8%, such as 2-6%, such as 2-4%, such as around 2%. The term openness is here to be understood as an open area of a given surface area. Thus, in case of a mesh having a surface area of 100 mm$^2$ and an openness of 2% the total open area is 2 mm$^2$.

The mesh may be secured to the watering bag using an adhesive, said adhesive defining a lower passage to the mesh. The lower passage is thus between a side of the watering bag and the mesh. The diameter of the lower passage may be between 5 mm and 15 mm, such as around 10 mm. Through-going holes may be provided in the side of watering bag in relation to the lower passage so that water is allowed to escape from the bag and into the lower passage. Thus, the holes may be provided in an area coinciding with the lower passage. Moreover, an upper passage may be arranged on the mesh. This upper passage may have a diameter between 4 mm and 12 mm, such as around 8 mm. The upper passage may be defined by an adhesive, an ink layer or appropriate means.

BRIEF DESCRIPTION OF THE DRAWINGS

The present invention will now be described in further details with reference to the accompanying figures, wherein

Fig. 1 shows a watering bag applying a first water friction type,

Fig. 2 shows a watering bag applying a second water friction type,

Fig. 3 shows a watering bag applying a third water friction type,

Fig. 4 shows a watering bag with releasable binding strips,

Fig. 5 shows a watering bag with released binding strips,

Fig. 6 shows a close-up of a preferred embodiment of the present invention,

Fig. 7 shows the preferred embodiment of the present invention in full scale, and

Fig. 8 illustrates a watering bag in use.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

DETAILED DESCRIPTION OF THE INVENTION

In its most general aspect the present invention relates to a simple and effective solution involving a watering bag. By placing the watering bag in the pot of an indoor plant an automatic watering process will take place over a predetermined time period.

The principle underlying the invention is a disposable polymer bag, where water is filled in at the top. The polymer bag has a reservoir for approximately 2.3 liters. An arrangement of water traps/barriers are integrated at the bottom of the polymer bag. The water traps/barriers add friction to the water flow.

At the very bottom part of the bag, a small tuned opening is processed, where the amount of water dripping out can be controlled in a very accurate manner.

The water bag is manufactured by heat welding two polymer foils together using a heat welding tool having the bag's geometry as well as the selected design of the water traps/barriers.

The bag should be empty after 7-10 days of watering. The positioning of the bag on top of the soil in the pot reduces the evaporation of water from the soil and thereby save water for the plant's survival.

The watering bag according to the present invention is suitable for mass production and thereby very cost efficient.

The size and weight of a single water droplet is determined by the surface tension of water, the density of water and to as minor degree the temperature of the water. One droplet of clean fresh water typically has a weight of 40 mg and thereby a volume of 40 mm$^3$

From this knowledge one can set up the following calculations:

$$10 \text{ days} = 10 \times 24 \times 60 \times 60 \text{ sec} = 864.000 \text{ sec}$$

$$1.6 \text{ L} = 1600 \text{ cm}^3 = 1.600.000 \text{ mm}^3.$$

$$1 \text{ droplet} = 40 \text{ mm}^3 = 40 \text{ mg}.$$

Thus, the amount of droplets in 1.6 L equals 1.600.000/40 = 40.000 droplets. Moreover, the number droplets per second is then 40.000/864.000 = 0.0463 which corresponds to one droplet every 22 seconds.

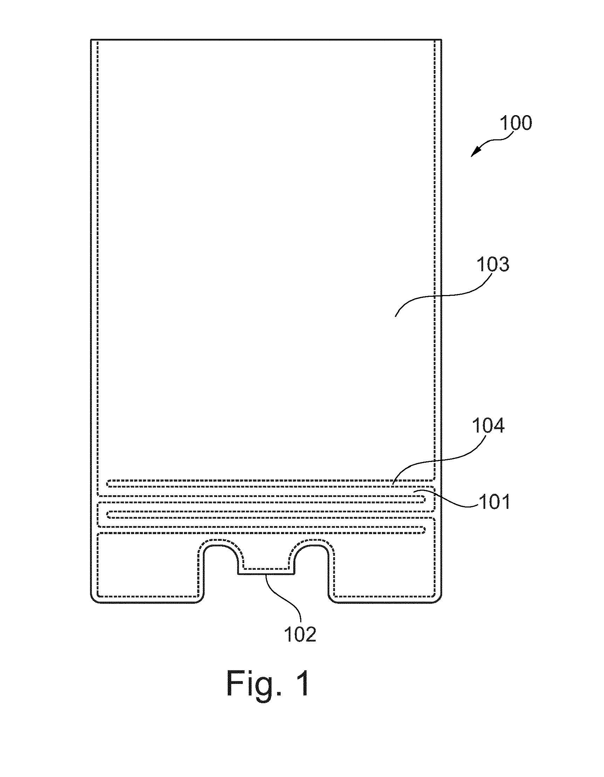

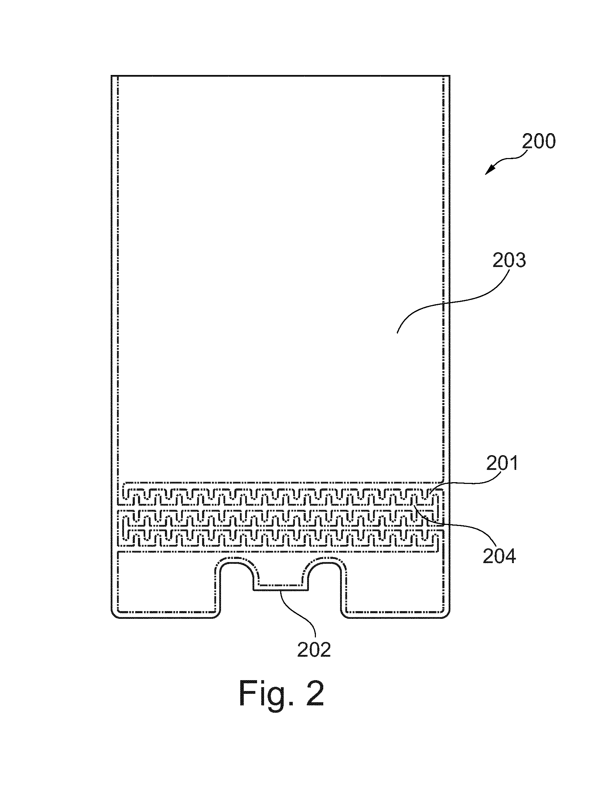

The water traps/barriers integrated at the bottom of the polymer bag may be implemented in various ways. Fig. 1 shows a polymer bag 100 having a reservoir 103, a water outlet 102 and a channel 101 forming the water traps/barriers between heat welded regions 104. Fig. 2 shows a more complicated water trap/barrier 201 between heat welded regions 204. Similar to Fig. 1 the embodiment 200 depicted in Fig. 2 has a reservoir 203 and a water outlet 202.

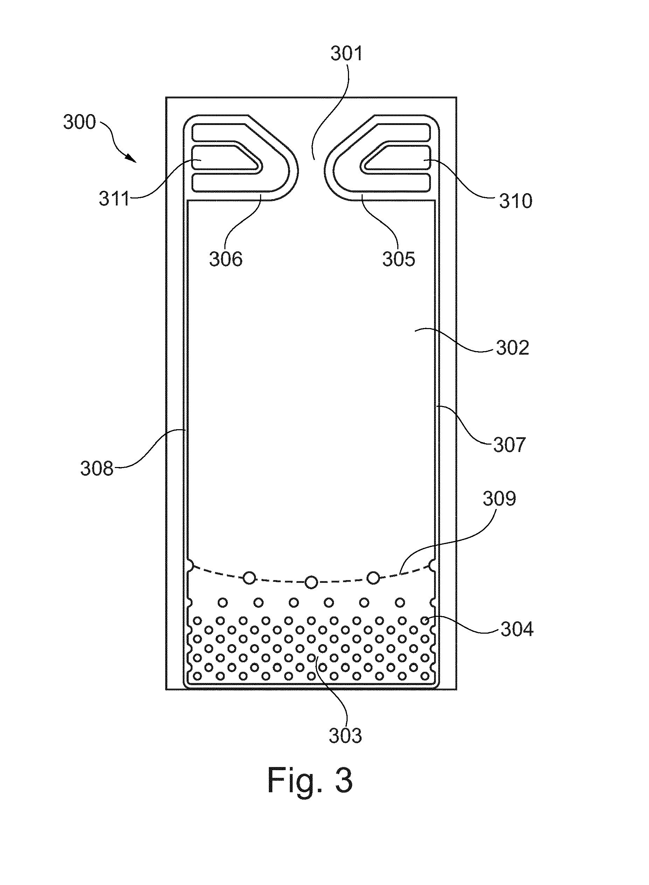

Another embodiment 300 of the present invention is depicted in Fig. 3. This embodiment comprises a water inlet 301, a reservoir 302 and water traps/barriers 303 being formed by a plurality of welded dots 304. The water inlet 301 is defined between welded portions 305, 306, 310 and 311. Similarly, the reservoir 302 is defined between welded portions 307 and 308. The dotted line 309 indicates where the watering bag is intended to fold when it is positioned on the soil of the indoor plant.

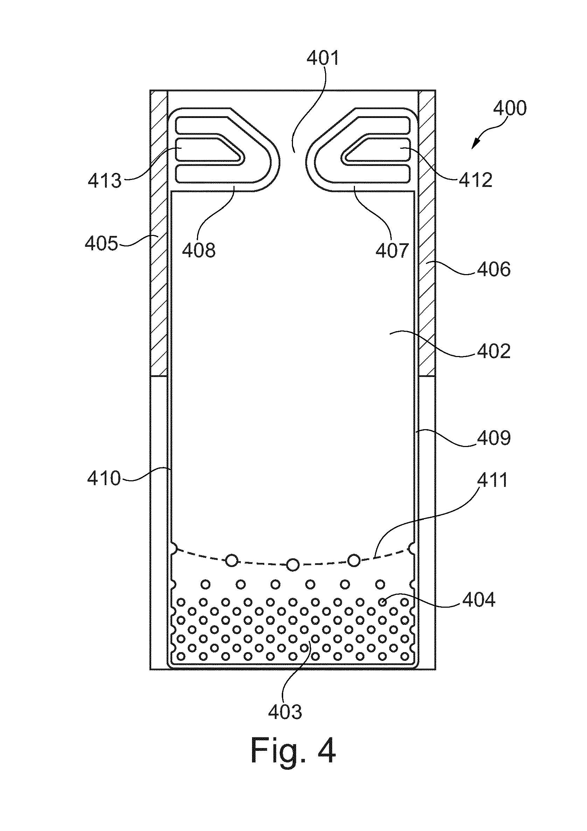

Fig. 4 shows an embodiment 400 of the present invention comprising a water inlet 401, a reservoir 402 and water traps/barriers 403 being formed by a plurality of welded dots 404. The water inlet 401 and the reservoir 402 are defined between welded portions 407, 408, 412, 413 and 409, 410, respectively. Again, the folding of the watering bag is marked as 411. In addition, two releasable binding strips 405, 406 are defined by perforated lines.

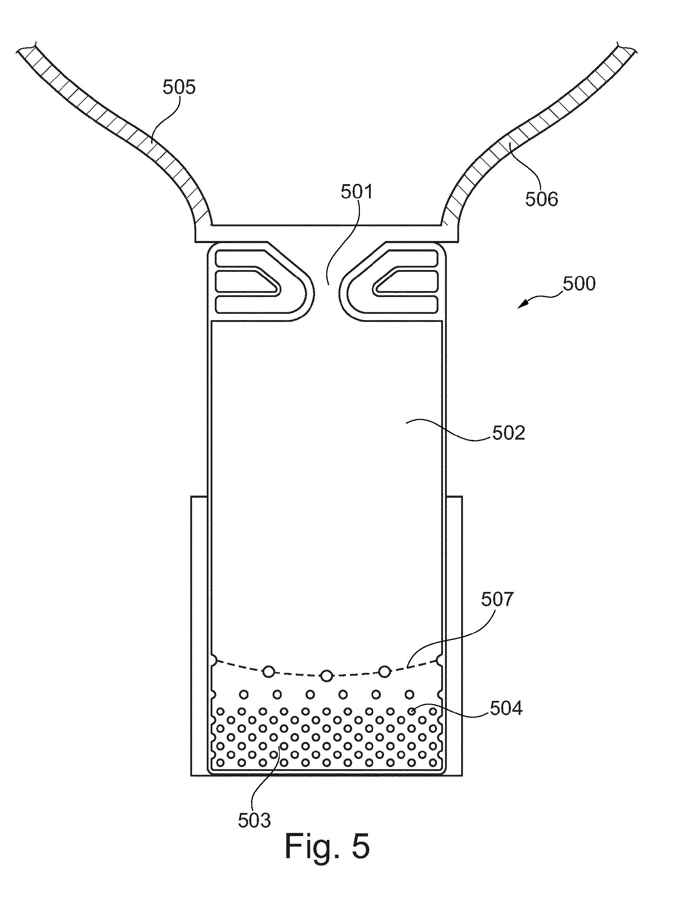

As illustrated in Fig. 5 the releasable binding strips 505, 506 may be at least partly detached from the bag so that they form a pair of binding strips that can be used to secure the bag to the indoor plant. Similar to Fig. 4 the watering bag shown in Fig. 5 also comprises a water inlet 501, a reservoir 502 and water traps/barriers 503 being formed by a plurality of welded dots 504. The folding line 507 is depicted as well.

The embodiment depicted in Figs. 4 and 5 is made of a Low Density Poly Ethylene (LDPE) foil which as a high surface energy that reduces the amount of air bubbles. The thickness of the foil is 60 $\mu$m and the foil itself is semi-transparent having a green color. The capacity of the watering bag is approximately 2.3 liter.

The water outlet (not shown in Figs. 3-5) of the watering bag is around 0.2 mm. Typically two water outlet holes are made in one process using a 0.2 mm needle with a sharp tip.

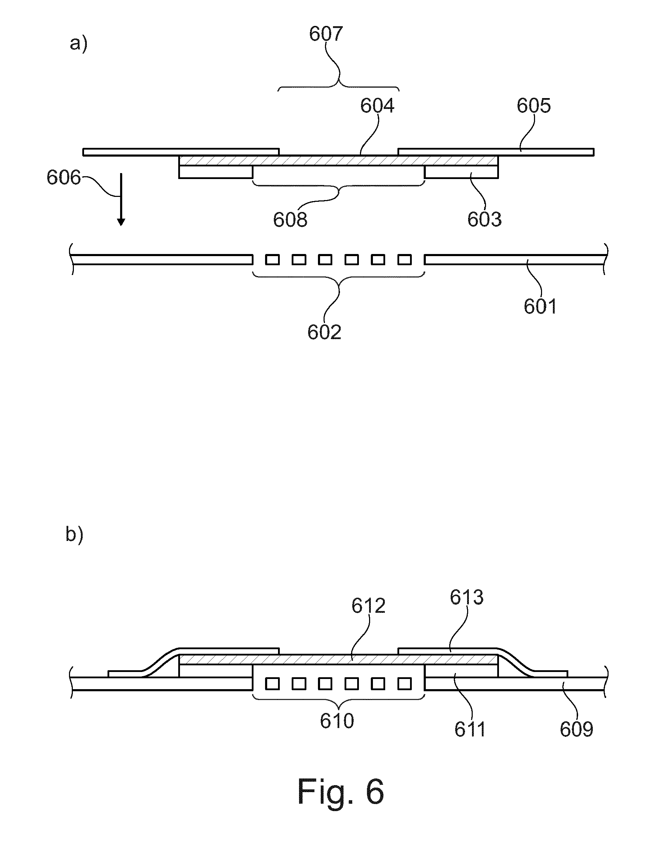

Fig. 6 shows a preferred implementation of the water outlet region. As depicted in Fig. 6a a plurality of holes 602 are provided through the side 601 of the polymer bag. In Fig. 6a only one side of the polymer bag is depicted. The diameter of the holes 602, the number of holes as well as the density of the holes may be varied in order to adjust the amount of water that can escape through the holes 602. As an example 25 holes having a diameter of 0.35 mm may be provided within a circular area having a diameter of 10 mm. In fact the holes 602 may be provided in both sides of the polymer bag in that this would ease the manufacturing process significantly.

Still referring to Fig. 6a a mesh 604 is provided between two adhesive members 603, 605. The adhesive member 603 is adapted to secure the mesh 604 to the side 601 of the bag via its adhesive properties on both sides. This is indicated by the arrow 606. The adhesive member 603 has an opening 608 which may cover the same area as the holes 602 in the side 601 of the polymer bag. The adhesive member 605 has an opening 607 which defines the permeability of the water outlet region. The larger the opening 607 the larger the overall permeability through the water outlet region. The adhesive member 605 may be implemented by providing a layer of ink directly to the mesh 604. This layer of ink should leave an opening 607 to ensure a predetermined permeability through the water outlet region.

The mesh 604 may be manufactured of a woven polyester-based material. However, the mesh 604 may be manufactured of non-woven materials as well. However, the mesh must be manufactured of a non-water absorbing material in order to secure a certain amount of permeability of the mesh 604. Typically, an acceptable permeability of the mesh 604 is provided by an openness of the mesh material between 2% and 10%.

Referring now to Fig. 6b the adhesive members 611, 613 have secured the mesh 612 to the side 609 of the polymer bag. The holes 610 in the polymer bag 609 prevent that air bubbles block the passage through the mesh 612. Thus, the holes 610 act as a filter for air bubbles.

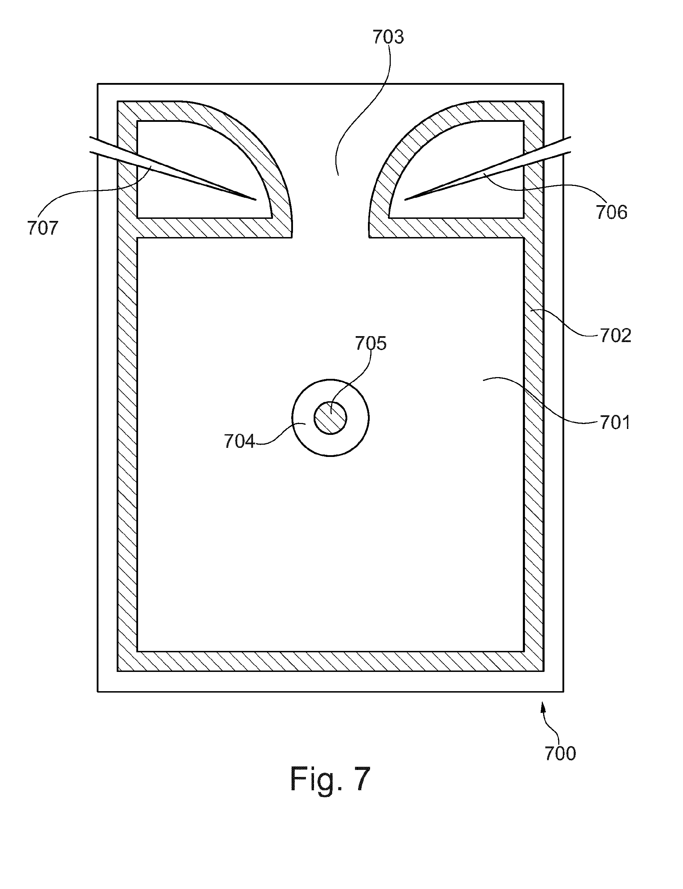

Fig. 7 shows the overall design of a preferred watering bag 700. As seen the watering bag 700 has a reservoir 701 and a water inlet region 703 being defined by welded structures 702. Two splits 706, 707 are provided in the watering bag 700 in order to provide binding or closing strips. The water outlet region of Fig. 6 is positioned near the center of the reservoir 701 with 704 being the adhesive and 705 being the mesh.

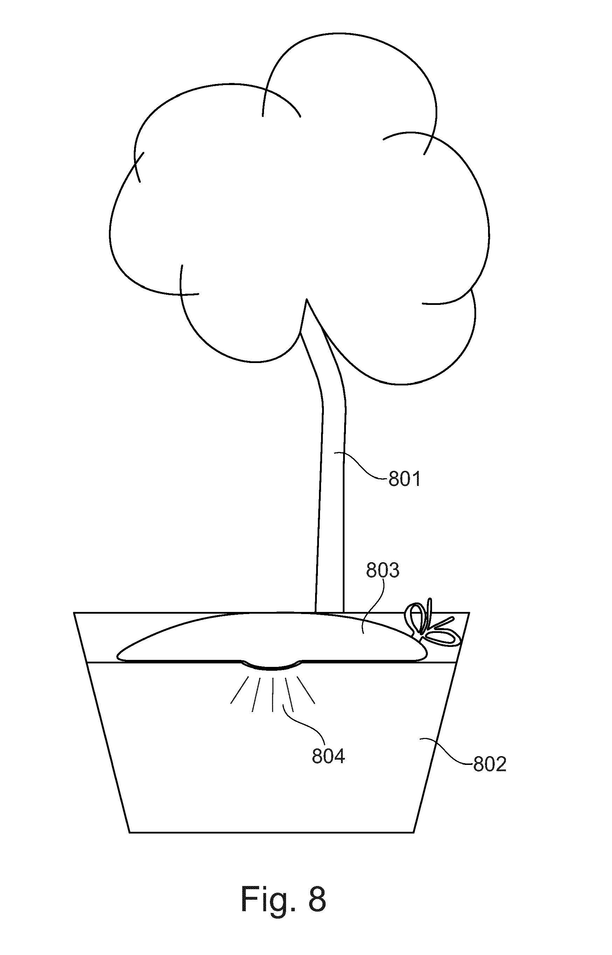

Fig. 8 illustrates how the watering bag 803 is adapted to be positioned directly on the soil 802 of an indoor plant 801, and how water leaks into the soil in the region 804.

The watering bag will automatically provide 2.3 liters of water to the indoor plant in a period of 7 - 10 day depending of room temperature, light conditions etc. In terms of manufacturing the watering bag is manufactured by heat welding of two pieces of foils together

**Claims**

1. A watering bag for automatic supply of water to plants, the watering bag comprising

    1) a water inlet region,
    2) a water reservoir, and
    3) a water outlet region,

   wherein the water inlet region comprises an opening for leading water to the water reservoir, and wherein the water outlet region comprises a friction inducing arrangement for leading water from the water reservoir to the exterior of the watering bag in a controlled manner.

2. A watering bag according to claim 1, wherein the watering bag comprises a pair of polymer foils being welded together.

3. A watering bag according to claim 1 or 2, further comprising one or more releasable binding means being adapted to secure the watering bag to a plant and/or to close the water inlet region.

4. A watering bag according to any of the preceding claims, wherein the water reservoir is capable of housing between 1 and 4 litres of water, such as between 2 and 3 litres of water, such as around 2.3 litres of water.

5. A watering bag according to any of the preceding claims, wherein the friction inducing arrangement is dimensioned to provide one droplet of water at least every 60 seconds, such as one droplet at least every 45 seconds, such as one droplet at least every 30 seconds.

6. A watering bag according to any of the preceding claims, wherein the friction inducing arrangement comprises a plurality of welded dots.

7. A watering bag according to claim 6, further comprising a folding region at which the watering bag is adapted to fold when positioned on the soil.

8. A watering bag according to claim 7, wherein the folding region is defined by a number of welded dots.

9. A watering bag according to any of claims 1-5, wherein the friction inducing arrangement comprises a mesh having a predetermined permeability.

10. A watering bag according to claim 9, wherein the permeability of the mesh is at least partly given by an openness of the mesh, said openness being in the range 2-10%, such as 2-8%, such as 2-6%, such as 2-4%, such as around 2%.

11. A watering bag according to claim 9 or 10, wherein the mesh is secured to the watering bag using an adhesive, said adhesive defining a lower passage to the mesh.

12. A watering bag according to claim 11, wherein through-going holes are provided in the watering bag in relation to the lower passage.

13. A watering bag according to any of claims 9-12, further comprising an upper passage arranged on the mesh.

Fig. 1

Fig. 2

Fig. 3

Fig. 4

Fig. 5

a)

607

604          605

606 ↓

608     603

602          601

b)

612     613

610     611     609

Fig. 6

Fig. 7

Fig. 8

Europäisches
Patentamt

European
Patent Office

Office européen
des brevets

# EUROPEAN SEARCH REPORT

Application Number

EP 15 19 4446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/01220 A1 (KLARSOE & CO APS [DK]; SANDER THOMAS [DK]) 13 January 2000 (2000-01-13) | 1-5,9-11 | INV. A01G27/04 A01G27/00 |
| A | * abstract; claims 1-11; figures 1-3, 5-6, 10 * * page 3, lines 15-32 * * page 5, lines 5-27 * * page 7, lines 1-27 * ----- | 6,12,13 | |
| X | FR 2 543 794 A1 (THOMAS PIERRE ANDRE [FR]) 12 October 1984 (1984-10-12) | 1-4,9-11 | |
| A | * abstract; claims 1-4; figures 1-5, 8 * * page 1, line 28 - page 2, line 33 * * page 5, lines 2-11 * ----- | 6 | |
| X | FR 1 035 799 A (POTAIN, FAUSTIN [FR]) 31 August 1953 (1953-08-31) * figures 1-4 * * page 1, left-hand column, paragraphs 1, 3-5 * * page 1, right-hand column, paragraphs 1, 10-11 * * page 2, left-hand column, paragraph 1-7 * ----- | 1 | |
| X | US 2014/366438 A1 (LANCASTER CHRISTINE [US] ET AL) 18 December 2014 (2014-12-18) * abstract; figures 1, 1A, 2 * * paragraphs [0005], [0024], [0027] - [0028] * ----- | 1 | TECHNICAL FIELDS SEARCHED (IPC) A01G |
| X | DE 202 16 035 U1 (MARX GALIZIA JOVITA [DE]; GALIZIA ANTONIO [DE]) 20 March 2003 (2003-03-20) * abstract; claims 1-8; figures 1-4 * * page 3, paragraph 4 * * page 4, paragraph 3 * ----- | 1 | |

The present search report has been drawn up for all claims

| Place of search | Date of completion of the search | Examiner |
|---|---|---|
| The Hague | 9 August 2016 | Guillem Gisbert, I |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 4446

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2016

| Patent document cited in search report | | Publication date | Patent family member(s) | | Publication date |
|---|---|---|---|---|---|
| WO 0001220 | A1 | 13-01-2000 | AU<br>WO | 4769099 A<br>0001220 A1 | 24-01-2000<br>13-01-2000 |
| FR 2543794 | A1 | 12-10-1984 | NONE | | |
| FR 1035799 | A | 31-08-1953 | NONE | | |
| US 2014366438 | A1 | 18-12-2014 | NONE | | |
| DE 20216035 | U1 | 20-03-2003 | NONE | | |

EPO FORM P0459

For more details about this annex : see Official Journal of the European Patent Office, No. 12/82